# EUROPÄISCHE PATENTSCHRIFT

(11) **EP 2 481 776 B1**
(45) Veröffentlichungstag und Bekanntmachung des Hinweises auf die Patenterteilung: **19.03.2014**
(21) Anmeldenummer: 12151443.4
(22) Anmeldetag: 17.01.2012
(51) Int. Cl.: C08L 77/00, C08L 51/04, C08L 51/06, C08L 23/08, C08K 5/1515

(54) **Verwendung von Formmassen**
Use of moulding materials
Utilisation de matières à mouler

(30) Priorität: 28.01.2011 EP 11152464
(43) Veröffentlichungstag der Anmeldung: 01.08.2012
(73) Patentinhaber: LANXESS Deutschland GmbH, 50569 Köln (DE)
(72) Erfinder: Margraf, Günter, 41539 Dormagen (DE); Joachimi, Detlev, 47800 Krefeld (DE)

(56) Entgegenhaltungen:
- EP-A1- 1 038 921
- EP-A1- 1 333 060
- EP-A1- 1 652 888
- EP-A2- 1 837 487
- WO-A1-2005/121249

## Beschreibung

Diese Erfindung betrifft die Verwendung von Formmassen, enthaltend A) wenigstens ein Polyamid und/oder Copolyamid, B) wenigstens ein Copolymerisat enthaltend mindestens ein Olefin und mindestens einen Acrylsäureester eines aliphatischen Alkohols, C) wenigstens ein di- oder mehrfunktionelles verzweigend oder kettenverlängernd wirkendes Additiv, D) wenigstens einen von den Komponenten B) und C) verschiedenen Schlagzähmodifikator und gegebenenfalls noch E) wenigstens ein sonstiges von den vorgenannten Komponenten sich unterscheidendes Additiv, zur Herstellung von Halbzeugen bzw. daraus herzustellender Erzeugnisse, Bauteile, Formteile oder Formkörper mit erhöhter Beständigkeit gegenüber Kurbelgehäusegasen und/oder deren Bestandteilen sowie ein Verfahren zur Verbesserung von Erzeugnissen, Formkörpern, Formteilen oder Bauteilen in Kraftfahrzeugen, bevorzugt in deren Verbrennungsmotoren, hinsichtlich ihrer Beständigkeit gegenüber Kurbelgehäusegasen indem man zu deren Herstellung jene Formmassen einsetzt.

Technische Thermoplaste haben in den letzten Jahren zunehmend traditionelle Metallkonstruktionen im Motorraum von Kraftfahrzeugen ersetzt. Neben der Reduzierung der Bauteilgewichte und Vorteilen in der Herstellung (Kostenreduktion, Funktionsintegration, material- und verfahrensbedingte Designfreiheit, glattere Innenoberflächen, etc) ist dies insbesondere auf die hervorragenden Materialeigenschaften wie der hohen Dauergebrauchstemperaturen, hoher dynamischer Belastbarkeit und Beständigkeit gegen Thermoalterung und Chemikalien zurückzuführen ("Rohrsysteme im Motorraum", Kunststoffe 11/2007, Carl Hanser Verlag, 126-128). Als problematisch für viele technische Thermoplaste erweist sich die Beständigkeit gegenüber Kurbelgehäusegasen und/oder deren Bestandteile, im Englischen blowbygas oder crankcase gas genannt. Ein Teil der beim Verbrennungsprozess im Motorraum von Kraftfahrzeugen entstehenden Abgase werden in das Zylinderkurbelgehäuse eingeschleppt und von dort über einen Schlauch dem Motor zur Verbrennung zurückgeführt. Dieses sogenannte Kurbelgehäusegas kann sich als Kondensat niederschlagen und die an exponierter Stelle eingesetzten Polymerwerkstoffe schädigen. Abhängig von den Betriebsbedingungen des Motors variiert die Zusammensetzung des Kondensates erheblich. Es besteht zum überwiegenden Teil aus Kraftstoff, Motorenöl und einer wässrigen, sauren, insbesondere salpetersauren, Phase. Eine Vorrichtung und ein Verfahren zur Reinigung von Kurbelgehäusegas ist Gegenstand der EP 1 537 301 B1. Aus DE 101 27 819 A1 und aus DE 20 2007 003 094 U1 sind Öl- bzw. Ölvorabscheider für Kurbelgehäusegas bekannt. DE 10 2008 018 771 A1 beschreibt eine Kurbelgehäusegas-Rückfuhrvorrichtung.

Im Gegensatz zum zitierten Stand der Technik der das Kurbelgehäusegas reinigt, abführt oder abscheidet bestand die Aufgabe der vorliegenden Erfindung darin, Erzeugnisse, Bauteile, Formteile oder Formkörper mit erhöhter Beständigkeit gegenüber Kurbelgehäusegasen und/oder deren Bestandteile zur Verfügung zu stellen.

Erzeugnisse, Bauteile, Formteile oder Formkörper im Sinne der vorliegenden Erfindung werden in Kraftfahrzeugen bzw. in der Kraftfahrzeugindustrie eingesetzt und sind bevorzugt luftführende Bauteile in Kraftfahrzeugen, die in Kontakt mit Kurbelgehäusegasen und/oder deren Bestandteile stehen. Insbesondere bevorzugt sind es Reinluftleitungen, Ladeluftrohre, Ansaugrohre, Ventildeckel und Kurbelgehäuseentlüftungen.

Reinluftleitungen verbinden in turbogeladenen Verbrennungsmotoren den Luftfilter mit dem Turbolader. In nicht turbogeladenen Motoren verbinden Reinluftleitungen den Luftfilter mit den Ansaugrohren.

Unter Ladeluftrohren werden im Sinne der vorliegenden Erfindung die Verbindungsrohre zwischen Turbolader und Wärmetauscher/Ladeluftkühler sowie zwischen Wärmetauscher und Ansaugrohr in Verbrennungsmotoren verstanden.

Ansaugrohre sind unmittelbar am Zylinderkopf von Verbrennungsmotoren angebrachte Bauteile, die die angesaugte Luft bzw. das angesaugte Luft-Kraftstoff-Gemisch den Einlasskanälen der einzelnen Zylinder zuführen.

Der Ventildeckel, auch Zylinderkopfdeckel genannt, ist der oberste Abschluss eines (aufrechtstehenden) Verbrennungsmotors, bevorzugt eines Viertakt-Verbrennungsmotors. Er birgt die oberen Betätigungselemente des Ventiltriebs und verhindert das Austreten des Schmieröles in die Umwelt, sowie den Zutritt von Luft in den Motor.

Die Kurbelgehäuseentlüftung führt die Kurbelgehäusegase, die aus dem Brennraum eines Verbrennungsmotors über den Bereich zwischen Kolben bzw. Kolbenringen (Kolbenringstoßspalte) und Zylinder in den Kurbelraum eingetreten sind, dem Ansaugsystem des Motors zu.

Zur Herstellung von Reinluftleitungen und Ladeluftrohren werden derzeit beispielsweise elastomere Blockcopolyamide und thermoplastische Polyester-Elastomere verwendet ("Luftführung unter der Motorhaube", Kunststoffe 8/2001, Carl Hanser Verlag, 79-81).

Es wurde nun überraschend gefunden, dass Erzeugnisse, Bauteile, Formteile oder Formkörper mit erhöhter Beständigkeit gegenüber Kurbelgehäusegasen und/oder deren Bestandteile zugänglich sind durch die Verwendung von Formmassen, enthaltend Polyamide und/oder Copolyamide mittlerer Viskosität, Copolymerisate mindestens eines Olefins, bevorzugt eines α-Olefins, mit mindestens einem Methacrylsäureester oder Acrylsäureester eines aliphatischen Alkohols, wobei der MFI (Melt Flow Index) des Copolymerisats größer 10 g / 10 min ist, bevorzugt größer 150 g / 10 min und besonders bevorzugt größer 300 g / 10 min ist, epoxidiertem Pflanzenöl oder anderen di- oder mehrfunktionellen verzweigend oder kettenverlängernd wirkenden Additiven, Schlagzähmodifikatoren sowie gegebenenfalls weiteren Additiven.

Gegenstand der vorliegenden Erfindung ist die Verwendung von Formmassen enthaltend
A) 40 bis 98,98 Gew.-Teile wenigstens eines Polyamids und/oder Copolyamids,
B) 1 bis 10 Gew.-Teile, bevorzugt 2 bis 8 Gew.-Teile, besonders bevorzugt 3 bis 6 Gew.-Teile wenigstens eines Copolymerisats enthaltend mindestens ein Olefin, bevorzugt α-Olefin und mindestens einen Acrylsäureester eines aliphatischen Alkohols wobei der MFI (Melt Flow Index) des Copolymerisats B) größer 10 g / 10 min ist, bevorzugt größer 150 g / 10 min und besonders bevorzugt größer 300 g / 10 min ist und der MFI bei 190°C und einer Belastung von 2,16 kg bestimmt bzw. gemessen wird,
C) 0,01 bis 10 Gew.-Teile, bevorzugt 0,1 bis 6 Gew.-Teile, besonders bevorzugt 0,5 bis 5 Gew.-Teile wenigstens eines di- oder mehrfunktionellen verzweigend oder kettenverlängernd wirkenden Additivs enthaltend mindestens zwei und höchstens 15 verzweigend oder kettenverlängernd wirkende funktionelle Gruppen pro Molekül, und
D) 0,01 bis 40 Gew.-Teile, bevorzugt 5 bis 39 Gew.-Teile, besonders bevorzugt 15 bis 35 Gew.-Teile wenigstens eines von den Komponenten B) und C) verschiedenen Schlagzähmodifikators
   zur Verbesserung der Beständigkeit von Erzeugnissen, Formkörpern, Bauteilen, Formteilen oder Halbzeugen für Kraftfahrzeuge, bevorzugt in deren Verbrennungsmotoren, hinsichtlich ihrer Beständigkeit gegen Kurbelgehäusegase und/oder deren Bestandteilen.

In einer bevorzugten Ausführungsform können die erfindungsgemäßen thermoplastischen Formmassen zusätzlich zu den Komponenten A), B), C) und D) noch 0,001 bis 5 Gewichtsteile wenigstens eines sonstigen von den vorgenannten Komponenten sich unterscheidenden Additivs E) enthalten.

Erfindungsgemäß ist enthaltend als beinhaltend und nicht als bestehend aus auszulegen. In einer besonders bevorzugten Ausführungsform bestehen die erfindungsgemäßen Formmassen aus den Kompoenten A), B), C) und D) sowie gegebenenfalls noch E). Erfindungsgemäß bevorzugt besteht das Copolymerisat in Verfahrensschritt B) aus mindestens einem Olefin, bevorzugt α-Olefin und mindestens einen Acrylsäureester eines aliphatischen Alkohols.

Die mittels der erfindungsgemäß zu verwendenden Formmassen herzustellenden Erzeugnisse, Bauteile, Formteile, Formkörper oder Halbzeuge sind luftführende Bauteile in Kraftfahrzeugen, insbesondere in deren Verbrennungsmotoren, bevorzugt Reinluftleitungen, Ladeluftrohre, insbesondere Ladeluft-Vorlauf als auch Ladeluft-Rücklauf, Ansaugrohre, Kurbelgehäuseentlüftungen und Getriebeentlüftungen.

Beständigkeit gegenüber Kurbelgehäusegasen und/oder deren Bestandteile im Sinne der vorliegenden Erfindung bedeutet, dass die erfindungsgemäßen Erzeugnisse, Formteile, Bauteile oder Formkörper nach Kontakt gegenüber Kurbelgehäusegasen und/oder deren Bestandteile
a) eine Gewichtszunahme von weniger als 7,5 %, bevorzugt weniger als 5 % in Folge von Prüfmedium-Aufnahme zeigen,
b) keine oberflächliche Schädigung (z.B. Riss- und/oder Blasenbildung unter Einschluß von Prüfmedium) aufweisen und
c) nur eine geringe Veränderung mechanischer Kennwerte im Vergleich zum ungelagerten Zustand zeigen. Eine geringe Veränderung im Vergleich zum ungelagerten Zustand im Sinne der vorliegenden Erfindung bedeutet, dass
   1. die Abnahme der Shore D Härte nach Lagerung im Vergleich zum ungelagerten Zustand weniger als 10 %, bevorzugt weniger als 7,5 % beträgt und
   2. die Abnahme der Zugfestigkeit nach Lagerung im Vergleich zum ungelagerten Zustand weniger als 40 %, bevorzugt weniger als 25 % beträgt.

Bestandteile von Kurbelgehäusegasen im Sinne der vorliegenden Erfindung sind Kraftstoffe, Motorenöl, Getriebeöl, wässrige Säuren sowie anorganische Verbrennungsgase, insbesondere Stickoxide.

Gegenstand der Anmeldung ist ferner ein Verfahren zur Verbesserung von Erzeugnissen, Formkörpern, Formteilen oder Bauteilen in Kraftfahrzeugen, bevorzugt in deren Verbrennungsmotoren, hinsichtlich ihrer Beständigkeit gegenüber Kurbelgehäusegasen, dadurch gekennzeichnet, dass zu ihrer Herstellung Formmassen enthaltend
A) 40 bis 98,98 Gew.-Teile wenigstens eines Polyamids und/oder Copolyamids,
B) 1 bis 10 Gew.-%, bevorzugt 2 bis 8 Gew.-Teile, besonders bevorzugt 3 bis 6 Gew.-Teile wenigstens eines Copolymerisats enthaltend mindestens ein Olefin, bevorzugt α-Olefin und mindestens einen Acrylsäureester eines aliphatischen Alkohols wobei der MFI (Melt Flow Index) des Copolymerisats B) größer 10 g / 10 min ist, bevorzugt größer 150 g / 10 min und besonders bevorzugt größer 300 g / 10 min ist und der MFI bei 190 °C und einer Belastung von 2,16 kg bestimmt bzw. gemessen wird,
C) 0,01 bis 10 Gew.-Teile, bevorzugt 0,1 bis 6 Gew.-Teile, besonders bevorzugt 0,5 bis 5 Gew.-Teile wenigstens eines di- oder mehrfunktionellen verzweigend oder kettenverlängernd wirkenden Additivs enthaltend mindestens zwei und höchstens 15 verzweigend oder kettenverlängernd wirkende funktionelle Gruppen pro Molekül, und
D) 0,01 bis 40 Gew.-Teile, bevorzugt 5 bis 39 Gew.-Teile, besonders bevorzugt 15 bis 35 Gew.-Teile wenigstens eines sich von den Komponenten B) und C) verschiedenen Schlagzähmodifikators eingesetzt werden.

Zur Herstellung der als Komponente A) einzusetzenden Polyamide sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der in der erfindungsgemäßen Formmasse als Komponente A) einzusetzenden Polyamide verlaufen bevorzugt über die Polykondensation in der Schmelze. Erfindungsgemäß wird hierunter auch die hydrolytische Polymerisation von Lactamen als Polykondensation verstanden.

Erfindungsgemäß bevorzugte Polyamide sind teilkristalline oder amorphe Polyamide, die ausgehend von Diaminen und Dicarbonsäuren und/oder Lactamen mit wenigstens 5 Ringgliedern oder entsprechenden Aminosäuren hergestellt werden können. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6, Polyamid 66 und Caprolactam als Comonomer enthaltende Copolyamide.

Es können außerdem Anteile von rezyklierten Polyamid-Formmassen und / oder Faserrezyklaten enthalten sein.

Die für die Herstellung der Bauteile, Formteile, Formkörper oder Halbzeuge erfindungsgemäß einzusetzenden Formmassen enthalten als Basisharz bevorzugt Polyamide und/oder Copolyamide mit einer relativen Viskosität η rel von 2,3 bis 4,0 besonders bevorzugt von 2,7 bis 3,5, wobei die relative Viskosität an einer 1 gew.-%igen Lösung in meta-Kresol bei 25°C gemessen wird.

Die für die Herstellung der Erzeugnisse, Bauteile, Formteile, Formkörper oder Halbzeuge erfindungsgemäß einzusetzende Formmasse enthält wenigstens ein Copolymerisat B) aus mindestens einem Olefin, bevorzugt α-Olefin und mindestens einem Acrylsäureester eines aliphatischen Alkohols, wobei der MFI des Copolymerisats B) größer 10 g / 10 min ist, bevorzugt größer 150 g /10 min und besonders bevorzugt größer 300 g / 10 min ist und der MFI bei 190°C und einer Belastung von 2,16 kg bestimmt bzw. gemessen wird. In einer bevorzugten Ausführungsform besteht das Copolymerisat B) zu weniger als 4 Gew.-Teilen, besonders bevorzugt zu weniger als 1,5 Gew.-Teilen und ganz besonders bevorzugt zu 0 Gew.-Teilen aus Monomerbausteinen, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

Bezüglich des MFI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MFI die Masse einer Probe, die in einer bestimmten Zeit unter festgelegten Bedingungen durch eine Düse gedrückt wird. Dies erfolgt für Thermoplasten nach DIN 53 735 (1988) bzw. ISO 1133-1981. Der MFI dient zur Charakterisierung des Fließverhaltens (Formmassenprüfung) eines Thermoplasten bei bestimmten Druck- und Temperaturbedingungen. Er ist ein Maß für die Viskosität einer Kunststoffschmelze. Daraus lässt sich auf den Polymerisationsgrad, also die mittlere Anzahl von Monomereinheiten in einem Molekül schließen.

Der MFI nach ISO 1133 wird mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird die austretende Masse der Polymerschmelze (des sogenannten Extrudats) als Funktion der Zeit. Bei der Schmelze-Massefließrate müssen die abgestochenen Schmelzestränge gewogen werden.

MFI = Masse/10min

Die Einheit für den MFI ist g/10min. Im Rahmen der vorliegenden Erfindung wird der MFI bei 190 °C und einer Belastung von 2,16 kg bestimmt bzw. gemessen.

Geeignete Olefine, bevorzugt α-Olefine, als Bestandteil der Copolymerisate B) weisen bevorzugt zwischen 2 und 10 Kohlenstoff-Atomen auf und können unsubstituiert oder mit einer oder mehreren aliphatischen, cycloaliphatischen oder aromatischen Gruppe substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiteren bevorzugten Ausführungsform werden die weiteren reaktiven funktionellen Gruppen des Copolymerisates B), ausgewählt aus der Gruppe umfassend Epoxide, Oxetane, Anhydride, Imide, Aziridine, Furane, Säuren, Amine, Oxazoline, ausschließlich über die Olefine in das Copolymer B) eingebracht.

Der Gehalt des Olefins am Copolymerisat B) liegt zwischen 50 und 90 Gew.-Teilen, bevorzugt zwischen 55 und 75 Gew.-Teilen.

Das Copolymerisat B) wird weiterhin definiert durch den zweiten Bestandteil neben dem Olefin. Als zweiter Bestandteil werden Alkylester oder Arylalkylester der Acrylsäure eingesetzt, deren Alkyl-oder Arylalkylgruppe aus 1-30 Kohlenstoffatomen gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt kann die Alkylgruppe oder Arylalkylgruppe des Acrylsäureesters ausgewählt sein aus der Gruppe umfassend Methyl, Ethyl, n-Propyl, iso-Propyl, n-Butyl, iso-Butyl, tert-Butyl, sec-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppen oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß besonders bevorzugt sind Copolymerisate B), bei denen das Olefin mit Acrylsäure-(2-ethyl)-hexylester copolymerisiert wird. Ebenfalls geeignet sind Mischungen der beschriebenen Acrylsäureester.

Bevorzugt ist hierbei die Verwendung von mehr als 60 Gew.-Teilen, besonders bevorzugt mehr als 90 Gew.-Teilen und ganz besonders bevorzugt die Verwendung von 100 Gew.-Teilen Acrylsäure-(2-ethyl)-hexylester bezogen auf die Gesamtmenge an Acrylsäureester im Copolymerisat B).

In einer weiteren bevorzugten Ausführungsform werden die weiteren reaktiven funktionellen Gruppen ausgewählt aus der Gruppe umfassend Epoxide, Oxetane, Anhydride, Imide, Aziridine, Furane, Säuren, Amine, Oxazoline des Copolymerisates B) ausschließlich über die Acrylsäureester in das Copolymer (B) eingebracht.

Der Gehalt der Acrylsäureester am Copolymerisat B) liegt zwischen 10 und 50 Gew.-Teilen, bevorzugt zwischen 25 und 45 Gew.-Teilen.

Die für die Herstellung der erfindungsgemäßen Formkörper, Formteile, Erzeugnisse oder Bauteile einzusetzende Formmasse enthält als Komponente C) wenigstens ein di- oder mehrfunktionelles verzweigend oder kettenverlängernd wirkendes Additiv enthaltend mindestens zwei und höchstens 15 verzweigend oder kettenverlängernd wirkende funktionelle Gruppen pro Molekül. Als verzweigend bzw. kettenverlängende Additive kommen niedermolekulare und oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängemd wirkende funktionelle Gruppen sind bevorzugt Isocyanate, blockierte Isocyanate, Epoxide, Maleinsäureanhydrid, Oxazoline, Oxazine, Oxazolone.

Insbesondere bevorzugt sind Diepoxide auf Basis von Diglycidylether, insbesondere Bisphenol oder Epichlorhydrin, auf Basis von Aminepoxidharz, insbesondere Anilin und Epichlorhydrin, auf Basis von Diglycidylestern cycloaliphatischer Dicarbonsäuren und Epichlorhydrin, einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins mit mindestens zwei und höchstens 15 Epoxidgruppen pro Molekül.

Besonders bevorzugt sind Glycidylether, ganz besonders bevorzugt Bisphenol A-Diglycidylether und epoxidierte Fettsäureester des Glycerins, sowie auch ganz besonders bevorzugt epoxidiertes Sojaöl (CAS 8013-07-8).

Epoxidiertes Sojaöl ist als Co-Stabilisator und Weichmacher für Polyvinylchlorid bekannt (Plastics Additives Handbook, 5th Edition, Hanser-Verlag, München, 2001, S.460-462). Es wird insbesondere in Polyvinylchlorid-Dichtungen von Metalldeckeln zum luftdichten Verschließen von Gläsern und Flaschen verwendet.

Zur Verzweigung/Kettenverlängerung sind besonders bevorzugt geeignet:
1. Poly- bzw. Oligoglycidyl- oder Poly-(ß-methylglycidyl)-ether, bevorzugt erhältlich durch Umsetzung einer Verbindung mit mindestens zwei freien alkoholischen Hydroxygruppen und/oder phenolischen Hydroxygruppen mit einem geeignet substituierten Epichlorhydrin unter alkalischen Bedingungen, oder in Anwesenheit eines sauren Katalysators und anschließender Alkalibehandlung.
   Poly- bzw. Oligoglycidyl- oder Poly-(ß-methylglycidyl)-ether leiten sich bevorzugt ab von acyclischen Alkoholen, wie Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.
   Sie leiten sich aber auch bevorzugt ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)anilin oder p,p'-Bis-(2-hydroxyethyl-amino)-diphenylmethan.
   Die Epoxidverbindungen können sich bevorzugt auch von einkernigen Phenolen ableiten, insbesondere von Resorcin oder Hydrochinon; oder sie basieren auf mehrkernigen Phenolen, insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd, insbesondere Phenol-Novolake.
2. Poly- bzw. Oligo-(N-glycidyl)-Verbindungen bevorzugt erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
   Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin.
3. Poly- bzw. Oligo-(S-glycidyl)-Verbindungen insbesondere Di-S-glycidylderivate, die sich bevorzugt von Dithiolen, bevorzugt Ethan-1,2-dithiol oder Bis-(4-mercaptomethylphenyl)-ether ableiten.
4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl (CAS 8013-07-8).

Die für die Herstellung der erfindungsgemäßen Formkörper, Formteile, Erzeugnisse, Bauteile oder Halbzeuge einzusetzende Formmasse enthält wenigstens einen von den Komponenten B) und C) verschiedenen Schlagzähmodifikator D). Schlagzähmodifikatoren werden oft auch als Elastomermodifikatoren, Elastomere, Modifikatoren oder Kautschuke bezeichnet.

Bevorzugt handelt es sich dabei um Copolymerisate wobei Copolyamide ausgenommen sind, die bevorzugt aus mindestens zwei Monomeren der Reihe Ethylen, Propylen, Butadien, Isobuten, Isopren, Chloropren, Vinylacetat, Styrol, Acrylnitril und Acrylsäureester mit 1 bis 18 C-Atomen in der Alkoholkomponente aufgebaut sind.

Derartige Polymere werden z. B. in Houben-Weyl, "Methoden der organischen Chemie", Bd. 14/1 (Georg-Thieme-Verlag, Stuttgart, 1961), Seiten 392 bis 406 und Odian, "Principles of Polymerization" (Fourth Edition, Wiley-Interscience, 2004) beschrieben.

Im Folgenden werden einige gemäß der vorliegenden Erfindung bevorzugt einzusetzende Schlagzähmodifikatoren vorgestellt.

Bevorzugte Arten solcher als Komponente D) einzusetzenden Schlagzähmodifikatoren sind die sogenannten Ethylen-Propylen-Kautschuke (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen pro 100 C-Atome aufweisen können.

Als Dien-Monomere für EPDM-Kautschuke werden bevorzugt konjugierte Diene wie Isopren oder Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadien, Cyclooctadien und Dicyclopentadien sowie Alkenylnorbomene wie 5-Ethyliden-2-norbomen, 5-Butyli-den-2-norbornen, 2-Methallyl-5-norbornen, 2-Isopropenyl-5-norbomen und Tricyclodiene wie 3-Methyl-tricyclo-[5.2 1.0 2.6]-3,8-decadien oder deren Mischungen eingesetzt. Besonders bevorzugt werden Hexa-1,5-dien, 5-Ethylidennorbornen oder Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien bevorzugt Acrylsäure, Methacrylsäure oder deren Derivate, insbesondere Glycidyl(meth)acrylat, sowie Maleinsäureanhydrid genannt.

Zusätzlich können die Kautschuke noch Dicarbonsäuren, bevorzugt Maleinsäure oder Fumarsäure oder Derivate dieser Säuren, bevorzugt Ester und Anhydride, und/oder Epoxy-Gruppen enthaltende Monomere enthalten. Diese Dicarbonsäurederivate bzw. Epoxygruppen enthaltenden Monomere werden vorzugsweise durch Zugabe von Dicarbonsäure- bzw. Epoxygruppen enthaltenden Monomeren der allgemeinen Formeln (I) oder (II) oder (III) oder (IV) zum Monomerengemisch in den Kautschuk eingebaut, 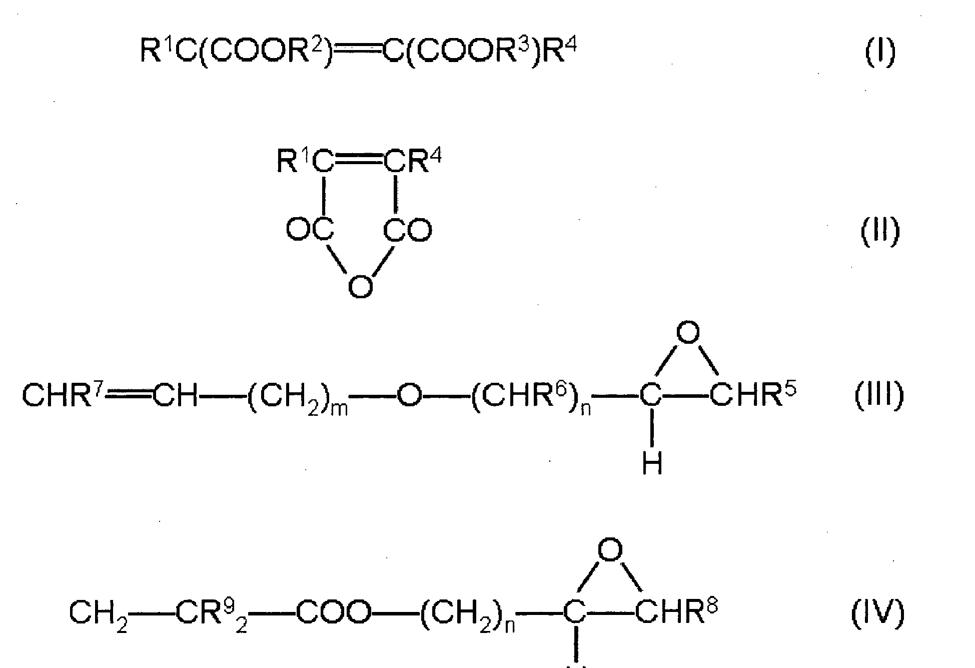 worin
- R¹ bis R⁹: Wasserstoff oder Alkylgruppen mit 1 bis 6 C-Atomen darstellen,
- m: eine ganze Zahl von 0 bis 20 (Endwerte eingeschlossen), und
- n: eine ganze Zahl von 0 bis 10 (Endwerte eingeschlossen) ist.

Vorzugsweise bedeuten die Reste R¹ bis R⁹ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Erfindungsgemäß bevorzugte Verbindungen der Formeln (I), (II) und (IV) sind Maleinsäure und Maleinsäureanhydrid.

Bevorzugt bestehen die Copolymeren aus 50 bis 98 Gew.-Teilen Ethylen, 0,1 bis 20 Gew.-Teilen Epoxygruppen enthaltenden Monomeren und/oder Säureanhydridgruppen enthaltenden Monomeren.

Daneben können auch Vinylester und Vinylether als Comonomere eingesetzt werden.

Die vorstehend beschriebenen Ethylencopolymere können nach bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung in der Literatur beschrieben wurde (Bemd Tieke, "Makromolekulare Chemie", Wiley-VCH, Weinheim, 2005, Seiten 86-90; George Odian, "Principles of Polymerization", Wiley-Interscience, 2004, Seiten 350-371).

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Butadien und Isopren sowie deren Mischungen genannt. Diese Monomeren können mit weiteren Monomeren, bevorzugt Styrol, Acrylnitril und Vinylethern copolymerisiert werden.

Die Weich- oder Kautschukphase der Elastomeren, bevorzugt mit einer Glasübergangstemperatur von unter 0°C, kann den Kern, die äußere Hülle oder eine mittlere Schale, insbesondere bei Elastomeren mit mehr als zweischaligem Aufbau, darstellen; bei mehrschaligen Elastomeren können auch mehrere Schalen aus einer Kautschukphase bestehen.

Sind neben der Kautschukphase noch eine oder mehrere Hartkomponenten, bevorzugt mit Glasübergangstemperaturen von mehr als 20°C, am Aufbau des Elastomeren beteiligt, so werden diese im allgemeinen durch Polymerisation von Styrol, Acrylnitril, Methacrylnitril, α-Methylstyrol, p-Methylstyrol als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind bevorzugt Epoxy-, Carboxyl-, latente Carboxyl-, Amino- oder Amidgruppen sowie funktionelle Gruppen, die durch Mitverwendung von Monomeren der allgemeinen Formel (V) 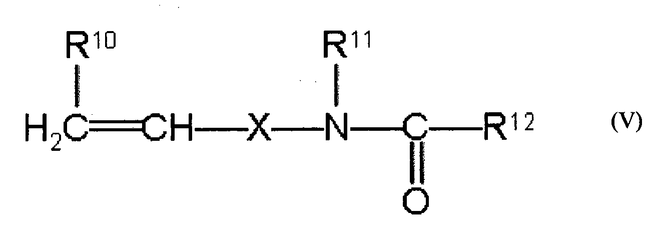 eingeführt werden können, worin die Substituenten folgende Bedeutung haben können:
- R¹⁰: Wasserstoff oder eine C₁-bis C₄-Alkylgruppe,
- R¹¹: Wasserstoff, eine C₁-bis C₈-Alkylgruppe oder eine mono-, bi- oder trizyklische homo- oder heteroaromatische Gruppe, insbesondere Phenyl,
- R¹²: Wasserstoff, eine C₁- bis C₁₀-Alkylgruppe, -OR¹³, oder eine mono-, bi- oder trizyklische homo- oder heteroaromatische Gruppe, insbesondere Phenyl,
- R¹³: eine C₁- bis C₈-Alkylgruppe oder eine mono-, bi- oder trizyklische homo- oder heteroaromatische Gruppe, insbesondere Phenyl, die gegebenenfalls mit O- oder N-haltigen Gruppen substituiert sein können,
- X: eine chemische Bindung, eine C₁- bis C₁₀-Alkylengruppe oder eine mono-, bi- oder trizyklische homo- oder heteroaromatische Gruppe, insbesondere Phenylen, oder 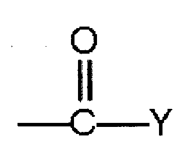
- Y: O-Z oder NH-Z und
- Z: eine C₁- bis C₁₀-Alkylengruppe oder eine mono-, bi- oder trizyklische homo- oder heteroaromatische Gruppe, insbesondere Phenyl.

Auch die in der EP 0 208 187 A2 beschriebenen Pfropfmonomeren sind zur Einführung reaktiver Gruppen an der Oberfläche geeignet.

Als weitere Beispiele seien noch Acrylamid und Methacrylamid, bevorzugt (N-t-Butylamino)-ethylmethacrylat, (N,N-Dimethylamino)-ethylacrylat, (N,N-Dimethylamino)-methylacrylat oder (N,N-Diethylamino)-ethylacrylat genannt.

Weiterhin können die Teilchen der Kautschukphase auch vernetzt sein. Als Vernetzer wirkende Monomere sind bevorzugt Buta-1,3-dien, Divinylbenzol, Diallylphthalat und Dihydrodicyclopentadienylacrylat sowie die in der EP 0 050 265 A1 beschriebenen Verbindungen einzusetzen.

Ferner können auch sogenannte pfropfvernetzende Monomere (graftlinking monomers) verwendet werden, d. h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe oder reaktiven Gruppen z. B. deutlich langsamer polymerisiert bzw. polymerisieren. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d. h. die aufgepfropfte Phase ist zumindest teilweise über chemische Bindungen mit der Pfropfgrundlage verknüpft.

Bevorzugte pfropfvemetzende Monomere sind Allylgruppen enthaltende Monomere, besonders bevorzugt Allylester von ethylenisch ungesättigten Carbonsäuren, insbesondere bevorzugt Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomerer; für nähere Einzelheiten sei hier beispielsweise auf die US-A 4148846 und US-A 4 327 201 verwiesen.

Nachfolgend seien einige erfindungsgemäß bevorzugte Emulsionspolymerisate aufgeführt. Zunächst sind hier Pfropfpolymerisate mit einem Kem und mindestens einer äußeren Schale zu nennen, die folgenden Aufbau haben:

**Tabelle 1**

| **Typ** | **Monomere für den Kern** | **Monomere für die Hülle** |
|---|---|---|
| I | Buta-1,3-dien, Isopren, Styrol, Acrylnitril, oder deren Mischungen | Styrol, Acrylnitril |
| II | wie I, aber unter Mitverwendung von Vernetzern | wie I |
| III | wie I oder II | Buta-1,3-dien, Isopren |
| IV | wie I oder II | wie I oder III, aber unter Mitverwendung von Monomeren mit reaktiven Gruppen wie hierin beschrieben |
| V | Styrol, Acrylnitril oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d. h. einschalige Elastomere aus Buta-1,3-dien, Isopren oder deren Copolymeren eingesetzt werden. Auch diese Produkte können durch Mitverwendung von vernetzenden Monomeren oder Monomeren mit reaktiven Gruppen hergestellt werden.

Bevorzugte Emulsionspolymerisate sind Copolymere von Ethylen mit Comonomeren, die reaktive Gruppen liefern.

Die beschriebenen Elastomere können auch nach anderen üblichen Verfahren, bevorzugt durch Suspensionspolymerisation, hergestellt werden. Siliconkautschuke, wie in der DE 3 725 576 A1, der EP 0 235 690 A2, der DE 3 800 603 A1 und der EP 0 319 290 A1 beschrieben, sind ebenfalls bevorzugt.

Selbstverständlich können auch Mischungen der vorstehend aufgeführten Kautschuktypen eingesetzt werden.

Die für die Herstellung der Erzeugnisse, Bauteile, Formteile, Formkörper oder Halbzeuge erfindungsgemäß einzusetzenden Formmassen enthalten insbesondere bevorzugt wenigstens einen Schlagzähmodifikator D) des EPM- oder EPDM-Typs.

Die für die Herstellung Formkörper, Formteile, Erzeugnisse, Bauteile oder Halbzeuge erfindungsgemäß einzusetzende Formmasse kann zudem wenigstens ein Additiv E) enthalten, das sich in jedem Fall von den Komponenten A), B), C) und D) unterscheidet. Bevorzugte Additive E) im Sinne der vorliegenden Erfindung sind Stabilisatoren (Plastics Additives Handbook, 5th Edition, Hanser-Verlag, München, 2001, Seiten 80-84, 352-361), Nukleierungsmittel (Plastics Additives Handbook, 5th Edition, Hanser-Verlag, München, 2001, Seiten 949-959, 966), Gleit- und Entformungsmittel (Plastics Additives Handbook, 5th Edition, Hanser-Verlag, München, 2001, Seiten 535-541, 546-548), Antistatika (Plastics Additives Handbook, 5th Edition, Hanser-Verlag, München, 2001, Seiten 627-636), Additive zur Erhöhung der elektrischen Leitfähigkeit (Plastics Additives Handbook, 5th Edition, Hanser-Verlag, München, 2001, Seite 630) sowie Farbstoffe und Pigmente (Plastics Additives Handbook, 5th Edition, Hanser-Verlag, München, 2001, Seiten 813-818, 823, 872-874). Die Additive E) können alleine oder in Mischung bzw. in Form von Masterbatchen eingesetzt werden.

Bevorzugte Stabilisatoren sind Thermostabilisatoren und UV-Stabilisatoren. Als Stabilisatoren werden bevorzugt Kupferhalogenide, bevorzugt Chloride, Bromide, Jodide in Verbindung mit Halogeniden von Alkalimetallen, bevorzugt Natrium-, Kalium und/oder Lithium-halogenide, und/oder in Verbindung mit hypophosphoriger Säure oder einem Alkali-oder Erdalkalisalz dieser Säure, sowie sterisch gehinderte Phenole, Hydrochinone, Phosphite, aromatische sekundäre Amine wie Diphenylamine, substituierte Resorcine, Salicylate, Benzotriazole oder Benzophenone, sowie verschieden substituierte Vertreter dieser Gruppen oder deren Mischungen eingesetzt.

Besonders bevorzugte Stabilisatoren sind Gemische aus einem Kupferjodid, einer oder mehreren Halogenverbindungen, vorzugsweise Natrium- oder Kaliumjodid, oder hypophosphoriger Säure oder eines Alkali- oder Erdalkalisalzes dieser Säure, wobei die einzelnen Komponenten des Stabilisatorgemisches in einer solchen Menge zugesetzt werden, dass die in der Formmasse enthaltene molare Menge an Halogen größer oder gleich der sechsfachen molaren Menge und kleiner oder gleich der fünfzehnfachen, vorzugsweise zwölffachen, molaren Menge des in der Formmasse enthaltenen Kupfers und die molare Menge an Phosphor größer oder gleich der molaren Menge und kleiner oder gleich der zehnfachen, vorzugsweise fünffachen molaren Menge des in der Formmasse enthaltenen Kupfers beträgt.

Als Pigmente bzw. Farbstoffe werden bevorzugt Ruß und/oder Nigrosinbase eingesetzt.

Als Nukleierungsmittel können bevorzugt Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaerytritoltetrastearat (PETS), langkettige Fettsäuren, bevorzugt Stearinsäure oder Behensäure oder Fettsäureester oder Fettsäuresalze, bevorzugt Ca- oder Zn-Stearat, sowie Amidderivate, bevorzugt Ethylen-bisstearylamid oder Montanwachse, bevorzugt Mischungen aus geradkettigen, gesättigten Carbonsäuren mit Kettenlängen von 28 bis 32 C-Atomen sowie niedermolekulare Polyethylen- bzw. Polypropylenwachse eingesetzt werden.

Als Additive zur Erhöhung der elektrischen Leitfähigkeit können bevorzugt Ruße, Leitfähigkeitsruße, Graphit sowie andere übliche, nicht faserige Additive zur Erhöhung der elektrischen Leitfähigkeit zugesetzt werden. Als nanoskalige Additive können bevorzugt sogenannte "single wall Kohlenstoff-Nanotubes" oder "multi wall Kohlenstoff-Nanotubes" eingesetzt werden.

Weiterhin können die zur Herstellung von erfindungsgemäßen Erzeugnissen, Bauteilen oder Formkörpern einzusetzenden Formmassen Bestandteile enthalten, die in einer oder mehreren Dimensionen kleiner als 100 Nanometer sind. Diese können organisch oder anorganisch, natürlich oder synthetisch sein, wobei auch Kombinationen verschiedener Nanomaterialien möglich sind.

Die erfindungsgemäß zu verwendenden Formmassen werden durch bekannte Verfahren zu den gewünschten Erzeugnissen, Bauteilen, Formkörpern, Formteilen oder Halbzeugen verarbeitet, bevorzugt durch Spritzgießen, Extrusion, Profil-Extrusionsverfahren oder Blasformen, wobei unter Blasformen besonders bevorzugt Standard-Extrusionsblasformen, 3D-Extrusionsblasformverfahren, das Saugblasformverfahren und die sequentielle Coextrusion verstanden werden.

Jene Verfahren zur Herstellung von Erzeugnissen, Bauteilen, Formteilen, Formkörpern oder Halbzeugen durch Extrusion oder Spritzguss arbeiten bei Schmelzetemperaturen im Bereich von 220 bis 330°C, bevorzugt von 230 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil bzw. Erzeugnis oder Formkörper gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder hergestellt, wobei der Extruder eine Maschine zur Herstellung thermoplastischer Formstücke ist. Man unterscheidet

Einschneckenextruder und Doppelschneckenextruder sowie die jeweiligen Untergruppen konventionelle Einschneckenextruder, förderwirksame Einschneckenextruder,

gegenläufige Doppelschneckenextruder und gleichläufige Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß Thielen, Hartwig, Gust, "Blasformen von Kunststoffhohlkörpern", Carl Hanser Verlag, München 2006, Seiten 15 bis 17:
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei unter dem Kopf hängenden Vorformlings durch eine in der Regel aus zwei Halbschalen bestehenden Form, dem Blasformwerkzeug,
4. Einschieben eines Blasdoms oder einer (ggf. mehrer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen-Abfälle" an beiden Enden des Blasformteils.

Weitere Schritte der Nachbearbeitung können folgen.

Mittels Standard-Extrusionsblasformen lassen sich auch Bauteile mit komplexer Geometrie und mehrachsigen Krummungen herstellen. Allerdings werden dann Formteile erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpem", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch "gesaugt". Nach Austritt des unteren Endes des Vorformlings aus der Blasform wird dieser durch Schließelemente oben und unten abgequetscht, und der Aufblas- und Kühlvorgang schließt sich an (Thielen, Hartwig, Gust, "Blasformen von Kunststoffhohlkörpern", Carl Hanser Verlag, München 2006, Seite 123).

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren zur Verbesserung von Erzeugnissen, Formkörpern, Formteilen oder Bauteilen in Kraftfahrzeugen hinsichtlich ihrer Beständigkeit gegenüber Kurbelgehäusegasen und/oder deren Bestandteilen, ist durch folgende Verfahrensschritte gekennzeichnet:
1) Herstellung von Erzeugnissen, Formkörpern, Formteilen oder Bauteilen mittels Extrusion, Profil-Extrusion, Blasformverfahren, insbesondere Standard-Extrusionsblasformen, 3D-Extrusionsblasformen, Saugblasformverfahren und sequentielle Coextrusion, oder Spritzguss aus Formmassen enthaltend
   A) 40 bis 98,98 Gew.-Teile wenigstens eines Polyamids und/oder Copolyamids,
   B) 1 bis 10 Gew.-Teile, bevorzugt 2 bis 8 Gew.-Teile, besonders bevorzugt 3 bis 6 Gew.-Teile wenigstens eines Copolymerisats enthaltend mindestens ein Olefin, bevorzugt α-Olefin und mindestens einen Methacrylsäureester oder Acrylsäureester eines aliphatischen Alkohols wobei der MFI (Melt Flow Index) des Copolymerisats B) größer 10 g / 10 min ist und der MFI bei 190 °C und einer Belastung von 2,16 kg bestimmt bzw. gemessen wird,
   C) 0,01 bis 10 Gew.-Teile, bevorzugt 0,1 bis 6 Gew.-Teile, besonders bevorzugt 0,5 bis 5 Gew.-Teile wenigstens eines di- oder mehrfunktionellen verzweigend oder ketten¬verlängernd wirkenden Additivs enthaltend mindestens zwei und höchstens 15 verzweigend oder kettenverlängernd wirkende funktionelle Gruppen pro Molekül, und
   D) 0,01 bis 40 Gew.-Teile, bevorzugt 5 bis 39 Gew.-Teile, besonders bevorzugt 15 bis 35 Gew.-Teile wenigstens eines sich von den Komponenten B) und C) verschiedenen Schlagzähmodifikators und
2) Einbau der gemäß 1) hergestellten Erzeugnisse, Formkörper, Formteile oder Bauteile als luftführende Bauteile oder Bestandteile luftführender Bauteile in Kraftfahrzeugen, insbesondere in deren Verbrennungsmotoren, bevorzugt als Reinluftleitungen, Ladeluftrohre, insbesondere Ladeluft-Vorlauf oder als Ladeluft-Rücklauf, Ansaugrohre, Kurbelgehäuseentlüftungen oder Getriebeentlüftungen.

### Beispiele

Zum Nachweis der erfindungemäß beschriebenen Verbesserungen wurden zunächst durch Compoundierung entsprechende Kunststoff-Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 260 und 300°C gemischt, als Strang in ein Wasserbad ausgetragen, bis zur Granulierfähigkeit abgekühlt und granuliert.

Der Spritzguss von Prüfkörpern (Flachstäbe 80x10x4 mm und Schulterstäbe 170x10x4 mm) der erfindungsgemäßen Formmasse des Beispiels 1 sowie Formmassen der Vergleichsbeispiele erfolgte auf einer Spritzgießmaschine des Typs ARBURG-520 C 200 - 350 unter den in Tabelle 2 genannten Masse- und Werkzeugtemperaturen.

Test T1 dient der Bestimmung der Beständigkeit gegenüber Bestandteilen von Kurbelgehäusegasen. Test T2 dient als Modellsystem zur Bestimmung der Beständigkeit gegenüber wässrigen, sauren Phasen, die Bestandteile von Kurbelgehäusegasen sein können.

### Test T1:

Zur Bestimmung der Ausgangswerte erfolgte die Härteprüfung nach Shore D in Anlehnung an DIN 53503 an einem Schulterstab 170x10x4 mm im spritzfrischen Zustand.

Zur optischen Beurteilung wurde ein Flachstab 80x10x4 mm gelagert. 5 weitere spritzfrische Schulterstäbe 170x10x4 mm wurden zur Bestimmung der Ausgangsmasse gewogen und anschließend wie folgt gelagert:
Die Prüfkörper wurden 4 h bei 60 °C in einem Schliffglas mit Stopfen im Wärmeschrank in 1 molarer Salpetersäure gelagert. Anschließend wurden die Prüfkörper mit destilliertem Wasser abgespült, anhaftende Restflüssigkeit abgetupft und 30 min bei Raumtemperatur getrocknet. Nachfolgend wurden die Prüfkörper in einem mittels Uhrglas verschlossenen Becherglas 18 h bei 135 °C in Reference Engine Oil Lubrizol OS 304 206 gelagert. Nach Ablauf der Einwirkungszeit wurden die Prüfkörper von anhaftender Prüfflüssigkeit mit Zellstoffpapier befreit und 30 min bei Raumtemperatur gelagert. Im Anschluss daran erfolgt eine 30-minütige Lagerung bei Raumtemperatur in FAM-Prüfflüssigkeit DIN 51604-2 - B (= FAM 2). Nach Beendigung der Kraftstofflagerung wurden die Prüfkörper 30 min bei Raumtemperatur an Luft gelagert und der Testzyklus erneut begonnen.

Die Lagerung wurde nach Abschluss des dritten Testzyklus beendet. 5 Schulterstäbe 170x10x4 mm wurden erneut gewogen, ein Flachstab 80x10x4 mm wurde optisch beurteilt.

An einem dieser gelagerten Schulterstäbe 170x10x4 mm erfolgte die Härteprüfung nach Shore D in Anlehnung an DIN 53503. Aus Tabelle 2 wird der erfindungsgemäße Effekt deutlich.

### Test T2:

Zur Bestimmung der Ausgangswerte erfolgte der Zugversuch gemäß ISO 527 an 5 spritzfrischen Schulterstäben 170x10x4 mm. 5 weitere spritzfrische Schulterstäbe 170x10x4 mm wurden zur Bestimmung der Ausgangsmasse gewogen und anschließend wie folgt gelagert:
Die Schulterstäbe 170x10x4 mm wurden 100 h bei 80 °C in einem Schliffglas mit Stopfen im Wärmeschrank in Testflüssigkeit A gelagert. Die Testflüssigkeit A wurde durch Lösen von 260 mg Natriumsulfat, 20 mg Milchsäure, 90 mg Ameisensäure 99%, 540 mg Essigsäure 99%, 1100 mg Salpetersäure 65% und 50 mg Salzsäure 35% in 1000 mL demineralisiertem Wasser bei Raumtemperatur unter Rühren hergestellt. Anschließend wurden die Schulterstäbe 170x10x4 mm mit destilliertem Wasser abgespült, anhaftende Restflüssigkeit abgetupft und für 2000 h bei 80 °C in einem Schliffglas mit Stopfen im Wärmeschrank in Testflüssigkeit B gelagert. Die Testflüssigkeit B wurde durch Lösen von 260 mg Natriumsulfat, 100 mg Milchsäure, 210 mg Ameisensäure 99%, 400 mg Essigsäure 99%, 85 mg Natriumchlorid und 85 mg Natriumcitrat in 1000 mL demineralisiertem Wasser bei Raumtemperatur unter Rühren hergestellt. Nach Ablauf der Einwirkungszeit wurden die Schulterstäbe 170x10x4 mm mit destilliertem Wasser abgespült, von anhaftender Prüfflüssigkeit mit Zellstoffpapier befreit und 30 min bei Raumtemperatur gelagert.

Anschließend wurden die Schulterstäbe 170x10x4 mm zur Bestimmung der Gewichtszunahme erneut gewogen und optisch beurteilt.

Im Anschluss daran erfolgt eine Trocknung dieser Schulterstäbe 170x10x4 mm bei 80 °C für vier Tage in einem Vakuumtrockenschrank. Anschließend erfolgte der Zugversuch gemäß ISO 527 bei Raumtemperatur.

**Tabelle 2: Ausführungsbeispiele**

| In der folgenden Tabelle sind die Mengen der Einsatzstoffe in Gew.-Teilen und die erfindungsgemäßen Effekte angegeben. | | | | | |
|---|---|---|---|---|---|
| | | **Beispiel 1** | **Vergleich 1** | **Vergleich 2** | **Vergleich 3** |
| Copolyamid ¹⁾ | [%] | 59,4 | | | |
| Ethylen-Acrylat-Copolymer ²⁾ | [%] | 5 | | | |
| Epoxidiertes Sojaöl ³⁾ | [%] | 3 | | | |
| Schlagzähmodifikator ⁴⁾ | [%] | 30 | | | |
| Additive ⁵⁾ | [%] | 2,6 | | | |
| Massetemperatur Spritzguß | [°C] | 280 | 260 | 240 | 240 |
| Werkzeugtemperatur Spritzguß | [°C] | 80 | 80 | 45 | 45 |

| **Test T1:** | | | | | |
|---|---|---|---|---|---|
| visuelle Beurteilung ⁶⁾ | | + | - | - | - |
| Gewichtszunahme ⁷⁾ | [%] | 4,3 | 23,7 | 10,0 | 7,9 |
| Härte Shore D vor Lagerung ⁸⁾ | | 62 | 49 | 48 | 52 |
| Härte Shore D nach Lagerung ⁸⁾ | | 58 | 32 | 43 | 45 |
| Abnahme der Härte Shore D nach Lagerung ⁸⁾ | [%] | 6,4 | 34,7 | 10,4 | 13,5 |

| **Test T2:** | | | | | |
|---|---|---|---|---|---|
| visuelle Beurteilung | | + | - | - | - |
| Gewichtszunahme ⁷⁾ | [%] | 3,5 | 6,2 | 29,1 | 12,6 |
| Zugfestigkeit vor Lagerung ⁹⁾ | [MPa] | 41 | 24 | 30 | 36 |
| Zugfestigkeit nach Lagerung ⁹⁾ | [MPa] | 33 | 23 | 17 | 18 |
| Abnahme der Zugfestigkeit nach Lagerung ⁹⁾ | [%] | 19,5 | 4,2 | 43,3 | 50 |

| | | | | | |
|---|---|---|---|---|---|
| Vergleich 1: elastomeres Blockcopolyamid von EMS (Grilon^{®} ELX 50 H NZ, Bezeichnung nach ISO 1874: PA6/X-HI, BGH, 32-002) Vergleich 2: thermoplastisches Polyester-Elastomer von DuPont Engineering Polymers (Hytrel^{®} HTR8441 BK316, Bezeichnung nach ISO 1043: TPC-ET) Vergleich 3: thermoplastisches Polyester-Elastomer von DuPont Engineering Polymers (Hytrel^{®} HTR4275 BK316, Bezeichnung nach ISO 1043: TPC-ET) 1) Copolyamid PA 6/66 (polymerisiert aus 95 % Caprolactam und 5 % AH-Salz aus Adipinsäure und Hexamethylendiamin) mit einer relativen Viskosität η rel von 2,85-3,05 gemessen an einer 1 gew.-%igen Lösung in meta-Kresol bei 25°C 2) Copolymerisat aus Ethen und Acrylsäure-2-ethylhexylester mit einem Ethen-Anteil von 63 Gewichts-% und einem MFI von 550 3) entspricht CAS 8013-07-8 4) Maleinsäureanhydrid modifiziertes Ethylen/Propylen-Copolymer 5) sonstige Additive wie Farbmittel, Stabilisatoren, Entformungsmittel 6) visuelle Beurteilung an gelagerten Prüfkörpern nach folgenden Kriterien: "+": keine Oberflächenschädigung bzw. Blasenbildung "-": Oberflächenschädigung bzw. Blasenbildung sichtbar "--": ausgeprägte Oberflächenschädigung bzw. Blasenbildung sichtbar 7) gravimetrische Bestimmung an jeweils 5 Prüfkörpern 8) gemessen in Anlehnung an DIN 53503 an jeweils einem Schulterstab 170x10x4 mm 9) gemessen nach ISO 527 an jeweils 5 Schulterstäben 170x10x4 mm | | | | | |

Prüfkörper der erfindungsgemäßen Formmasse des Beispiels 1 zeigen eine deutlich geringere Gewichtszunahme in Folge von Prüfmedium-Aufhahme und eine deutlich geringere Oberflächenschädigung nach Test T1 bzw. Test T2 als Prüfkörper der Vergleichsbeispiele 1, 2 und 3.

Darüber hinaus zeigt die erfindungsgemäße Formmasse des Beispiels 1 geringere Abnahmen der Härte Shore D nach Test T1 als die Vergleichsbeispiele 1, 2 und 3 sowie geringere Abnahmen der Zugfestigkeit nach Test T2 als die Vergleichsbeispiele 2 und 3.

## Patentansprüche

1. Verwendung von Formmassen enthaltend
A) 40 bis 98,98 Gew.-Teile wenigstens eines Polyamids und/oder Copolyamids,
B) 1 bis 10 Gew.-Teile wenigstens eines Copolymerisats enthaltend mindestens ein Olefin, bevorzugt α-Olefin und mindestens einen Methacrylsäureester oder Acrylsäureester eines aliphatischen Alkohols wobei der MFI (Melt Flow Index) des Copolymerisats B) größer 10 g / 10 min ist und der MFI bei 190 °C und einer Belastung von 2,16 kg bestimmt bzw. gemessen wird,
C) 0,01 bis 10 Gew.-Teile wenigstens eines di- oder mehrfunktionellen verzweigend oder kettenverlängernd wirkenden Additivs enthaltend mindestens zwei und höchstens 15 verzweigend oder kettenverlängernd wirkende funktionelle Gruppen pro Molekül, und
D) 0,01 bis 40 Gew.-Teile wenigstens eines von den Komponenten B) und C) verschiedenen Schlagzähmodifikators
zur Verbesserung der Beständigkeit von Erzeugnissen, Formkörpern, Bauteilen, Formteilen oder Halbzeugen für Kraftfahrzeuge, bevorzugt in deren Verbrennungsmotoren, hinsichtlich ihrer Beständigkeit gegen Kurbelgehäusegase und/oder deren Bestandteilen.

2. Verwendung der Formmassen gemäß Anspruch 1, **dadurch gekennzeichnet, dass** das Copolymerisat B) zu weniger als 4 Gew.-Teile aus Monomerbausteinen besteht, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

3. Verwendung der Formmassen gemäß Anspruch 1 oder 2, **dadurch gekennzeichnet, dass** im Copolymerisat B) das Olefin mit Acrylsäure-(2-ethyl)hexylester copolymerisiert wird.

4. Verwendung der Formmassen gemäß Anspruch 3, **dadurch gekennzeichnet, dass** im Copolymerisat B) das Olefin Ethen ist.

5. Verwendung der Formmassen gemäß der Ansprüche 1 bis 4, **dadurch gekennzeichnet, dass** der MFI des Copolymerisats B) größer 150 g / 10 min ist.

6. Verwendung der Formmassen gemäß der Ansprüche 1 bis 5, **dadurch gekennzeichnet, dass** die di- oder mehrfunktionellen verzweigend oder kettenverlängernd wirkenden Additive C) mindestens zwei und höchstens 15 verzweigend oder kettenverlängernd wirkende funktionelle Gruppen pro Molekül enthalten, die aus der Gruppe umfassend Isocyanate, blockierte Isocyanate, Epoxide, Maleinsäureanhydrid, Oxazoline, Oxazine, Oxazolone ausgewählt sind.

7. Verwendung der Formmassen gemäß der Ansprüche 1 bis 6, **dadurch gekennzeichnet, dass** die di- oder mehrfunktionellen verzweigend oder kettenverlängernd wirkenden Additive C) aus der Gruppe der epoxidierten Pflanzenöle ausgewählt sind.

8. Verwendung der Formmassen gemäß Anspruch 7, **dadurch gekennzeichnet, dass** als epoxidiertes Pflanzenöl epoxidiertes Sojaöl eingesetzt wird.

9. Verwendung der Formmassen gemäß der Ansprüche 1-8, **dadurch gekennzeichnet, dass** diese zusätzlich zu A), B), C) und D) noch E) 0,001 bis 5 Gew.-Teile wenigstens ein weiteres sich von den Komponenten B) bis D) unterscheidendes Additiv enthalten.

10. Verfahren zur Verbesserung von Erzeugnissen, Formkörpern, Formteilen oder Bauteilen in Kraftfahrzeugen hinsichtlich ihrer Beständigkeit gegenüber Kurbelgehäusegasen und/oder deren Bestandteilen **gekennzeichnet durch**
1) Herstellung von Erzeugnissen, Formkörpern, Formteilen oder Bauteilen mittels Extrusion, Profil-Extrusion, Blasformverfahren, insbesondere Standard-Extrusionsblasformen, 3D-Extrasionsblasformen, Saugblasformverfahren und sequentielle Coextrusion, oder Spritzguss aus Formmassen enthaltend
A) 40 bis 98,98 Gew.-Teile wenigstens eines Polyamids und/oder Copolyamids,
B) 1 bis 10 Gew.-Teile, bevorzugt 2 bis 8 Gew.-Teile, besonders bevorzugt 3 bis 6 Gew.-Teile wenigstens eines Copolymerisats enthaltend mindestens ein Olefin, bevorzugt α-Olefin und mindestens einen Methacrylsäureester oder Acrylsäureester eines aliphatischen Alkohols wobei der MFI (Melt Flow Index) des Copolymerisats B) größer 10 g / 10 min ist und der MFI bei 190 °C und einer Belastung von 2,16 kg bestimmt bzw. gemessen wird,
C) 0,01 bis 10 Gew.-Teile, bevorzugt 0,1 bis 6 Gew.-Teile, besonders bevorzugt 0,5 bis 5 Gew.-Teile wenigstens eines di- oder mehrfunktionellen verzweigend oder kettenverlängernd wirkenden Additivs enthaltend mindestens zwei und höchstens 15 verzweigend oder kettenverlängernd wirkende funktionelle Gruppen pro Molekül, und
D) 0,01 bis 40 Gew.-Teile, bevorzugt 5 bis 39 Gew.-Teile, besonders bevorzugt 15 bis 35 Gew.-Teile wenigstens eines von den Komponenten B) und C) verschiedenen Schlagzähmodifikators und
2) Einbau der gemäß 1) hergestellten Erzeugnisse, Formkörper, Formteile oder Bauteile als luftführende Bauteile oder Bestandteile luftführender Bauteile in Kraftfahrzeugen, insbesondere in deren Verbrennungsmotoren, bevorzugt als Reinluftleitungen, Ladeluftrohre, insbesondere Ladeluft-Vorlauf oder als Ladeluft-Rücklauf, Ansaugrohre, Kurbelgehäuseentlüftungen oder Getriebeentlüftungen.

## Claims

1. Use of moulding compositions comprising
A) from 40 to 98.98 parts by weight of at least one polyamide and/or copolyamide,
B) from 1 to 10 parts by weight of at least one copolymer comprising at least one olefin, preferably α-olefin, and at least one methacrylate or acrylate of an aliphatic alcohol, where the MFI (Melt Flow Index) of the copolymer B) is greater than 10 g/10 min and the MFI is determined or measured at 190°C using a load of 2.16 kg,
C) from 0.01 to 10 parts by weight of at least one di- or polyfunctional additive which has branching or chain-extending effect and which comprises, per molecule, at least two and at most 15 functional groups which have branching or chain-extending effect, and
D) from 0.01 to 40 parts by weight of at least one impact modifier differing from components B) and C)
to improve the stability of products, mouldings, components, moulded parts or semifinished products for motor vehicles, preferably in internal combustion engines of these, in respect of their resistance to crankcase gases and/or constituents of these.

2. Use of the moulding compositions according to Claim 1, **characterized in that** the copolymer B) is composed of less than 4 parts by weight of monomer units which comprise other reactive functional groups selected from the group consisting of epoxides, oxetanes, anhydrides, imides, aziridines, furans, acids, amines, oxazolines.

3. Use of the moulding compositions according to Claim 1 or 2, **characterized in that**, in the copolymer B), the olefin is copolymerized with 2-ethylhexyl acrylate.

4. Use of the moulding compositions according to Claim 3, **characterized in that**, in the copolymer B), the olefin is ethene.

5. Use of the moulding compositions according to Claims 1 to 4, **characterized in that** the MFI of the copolymer B) is greater than 150 g/10 min.

6. Use of the moulding compositions according to Claims 1 to 5, **characterized in that** the di- or polyfunctional additives C) which have branching or chain-extending effect comprise, per molecule, at least two and at most 15 functional groups which have branching or chain-extending effect, where these have been selected from the group consisting of isocyanates, capped isocyanates, epoxides, maleic anhydride, oxazolines, oxazines, oxazolones.

7. Use of the moulding compositions according to Claims 1 to 6, **characterized in that** the di- or polyfunctional additives C) which have branching or chain-extending effect have been selected from the group of the epoxidized vegetable oils.

8. Use of the moulding compositions according to Claim 7, **characterized in that** epoxidized vegetable oil used comprises epoxidized soya oil.

9. Use of the moulding compositions according to Claims 1-8, **characterized in that**, in addition to A), B), C) and D), these also comprise E) from 0.001 to 5 parts by weight of at least one further additive differing from components B) to D).

10. Process for improving products, mouldings, components or moulded parts in motor vehicles in respect of their resistance to crankcase gases and/or constituents of these, **characterized by**
1) production of products, mouldings, components or moulded parts by means of extrusion, profile extrusion or other extrusion processes, blow moulding processes, in particular standard extrusion blow moulding, 3D extrusion blow moulding, suction blow moulding processes and sequential coextrusion, or injection moulding from moulding compositions comprising
A) from 40 to 98.98 parts by weight of at least one polyamide and/or copolyamide,
B) from 1 to 10 parts by weight, preferably from 2 to 8 parts by weight, particularly preferably from 3 to 6 parts by weight, of at least one copolymer comprising at least one olefin, preferably α-olefin, and at least one methacrylate or acrylate of an aliphatic alcohol, where the MFI (Melt Flow Index) of the copolymer B) is greater than 10 g/10 min and the MFI is determined or measured at 190°C using a load of 2.16 kg,
C) from 0.01 to 10 parts by weight, preferably from 0.1 to 6 parts by weight, particularly preferably from 0.5 to 5 parts by weight, of at least one di- or polyfunctional additive which has branching or chain-extending effect and which comprises, per molecule, at least two and at most 15 functional groups which have branching or chain-extending effect, and
D) from 0.01 to 40 parts by weight, preferably from 5 to 39 parts by weight, particularly preferably from 15 to 35 parts by weight, of at least one impact modifier differing from components B) and C) and
2) incorporation of the products, mouldings, components or moulded parts, produced according to 1), in the form of air-conducting components or constituents of air-conducting components in motor vehicles, in particular in internal combustion engines of these, preferably in the form of clean-air lines, charge-air pipes, in particular charge-air feed line, or in the form of charge-air return line, intake pipes, crankcase vents or transmission vents.

## Revendications

1. Utilisation de matières à mouler contenant
A) 40 à 98, 98 parties en poids d'au moins un polyamide et/ou copolyamide,
B) 1 à 10 parties en poids d'au moins un copolymérisat contenant au moins une oléfine, de préférence α-oléfine, et au moins un ester d'acide méthacrylique ou ester d'acide acrylique avec un alcool aliphatique, le MFI (Melt Flow Index) du copolymérisat B) étant supérieur à 10 g / 10 min et le MFI étant déterminé ou mesuré à 190 °C et sous une charge de 2,16 kg,
C) 0,01 à 10 parties en poids d'au moins un additif di- ou polyfonctionnel à action de ramification ou de prolongement de chaîne, contenant au moins deux et au maximum 15 groupes fonctionnels à action de ramification ou de prolongement de chaîne par molécule, et
D) 0,01 à 40 parties en poids d`au moins un modificateur de la résistance au choc, différent des composants B) et C)
pour l'amélioration de la résistance de produits, corps moulés, éléments de construction, pièces moulées ou produits semi-finis pour véhicules automobiles, de préférence dans leurs moteurs à combustion interne, eu égard à leur résistance aux gaz de carter moteur et/ou à leurs composants.

2. Utilisation des matières à mouler selon la revendication 1, **caractérisée en ce que** le copolymérisat B) est constitué à raison d'au moins 4 parties en poids de composants monomères qui contiennent d'autres groupes fonctionnels réactifs choisis dans le groupe comprenant des époxydes, des oxétanes, des anhydrides, des imides, des aziridines, des furanes, des acides, des amines, des oxazolines.

3. Utilisation des matières à mouler selon la revendication 1 ou 2, **caractérisée en ce que** dans le copolymérisat B) l'oléfine est copolymérisée avec de l'acrylate de (2-éthyl)hexyle.

4. Utilisation des matières à mouler selon la revendication 3, **caractérisée en ce que** dans le copolymérisat B) l'oléfine est l'éthène.

5. Utilisation des matières à mouler selon les revendications 1 à 4, **caractérisée en ce que** le MFI du copolymérisat B) est supérieur à 150 g / 10 min.

6. Utilisation des matières à mouler selon les revendications 1 à 5, **caractérisée en ce que** les additifs di- ou polyfonctionnels à action de ramification ou de prolongement de chaîne C) contiennent par molécule au moins deux et au maximum 15 groupes fonctionnels à action de ramification ou de prolongement de chaîne, qui sont choisis dans le groupe comprenant des isocyanates, des isocyanates bloqués, des époxydes, l'anhydride maléique, des oxazolines, des oxazines, des oxazolones.

7. Utilisation des matières à mouler selon les revendications 1 à 6, **caractérisée en ce que** les additifs di- ou polyfonctionnels à action de ramification ou de prolongement de chaîne C) sont choisis dans le groupe des huiles végétales époxydées.

8. Utilisation des matières à mouler selon la revendication 7, **caractérisée en ce qu'**on utilise comme huile végétale époxydée l'huile de soja époxydée.

9. Utilisation des matières à mouler selon les revendications 1-8, **caractérisée en ce qu'**en plus de A), B), C) et D) celle-ci contiennent encore E) 0,001 à 5 parties en poids d'au moins un autre additif qui diffère des composants B) à D).

10. Procédé pour l'amélioration de produits, corps moulés, pièces moulées ou éléments de construction dans des véhicules automobiles, eu égard à leur résistance aux gaz de carter moteur et/ou à leurs composants, **caractérisé par**
1) la fabrication de produits, corps moulés, pièces moulées ou éléments de construction par extrusion, extrusion-profilage, des procédés de moulage par soufflage, en particulier formage par extrusion-soufflage standard, formage par extrusion-soufflage 3D, des procédés de formage par soufflage-aspiration et coextrusion séquentielle, ou moulage par injection, à partir de matières à mouler contenant
A) 40 à 98, 98 parties en poids d'au moins un polyamide et/ou copolyamide,
B) à 10 parties en poids, de préférence 2 à 8 parties en poids, de façon particulièrement préférée 3 à 6 parties en poids d'au moins un copolymérisat contenant au moins une oléfine, de préférence α-oléfine et au moins un ester d'acide méthacrylique ou ester d'acide acrylique avec un alcool aliphatique, le MFI (Melt Flow Index) du copolymérisat B) étant supérieur à 10 g / 10 min et le MFI étant déterminé ou mesuré à 190 °C et sous une charge de 2,16 kg,
C) 0,01 à 10 parties en poids, de préférence 0,1 à 6 parties en poids, de façon particulièrement préférée 0, 5 à 5 parties en poids d'au moins un additif di- ou polyfonctionnel à action de ramification ou de prolongement de chaîne, contenant au moins deux et au maximum 15 groupes fonctionnels à action de ramification ou de prolongement de chaîne par molécule, et
D) 0,01 à 40 parties en poids, de préférence 5 à 39 parties en poids, de façon particulièrement préférée 15 à 35 parties en poids d'au moins un modificateur de la résistance au choc, différent des composants B) et C) et
2) montage des produits, corps moulés, pièces moulées ou éléments de construction, fabriqués selon 1), comme éléments de construction transportant l'air ou composants d'éléments de construction transportant l'air dans des véhicules automobiles, en particulier dans leurs moteurs à combustion interne, de préférence en tant que conduits d'air filtré, tubes d'air de suralimentation, en particulier arrivée d'air de suralimentation ou en tant que retour d'air de suralimentation, tubes d'aspiration, conduits de purge d'air de carter moteur ou conduits de purge d'air des engrenages.
